**Europäisches Patentamt**

**European Patent Office**

**Office européen des brevets**

(11) Publication number: **0 127 706**
**B1**

(12) **EUROPEAN PATENT SPECIFICATION**

(45) Date of publication of patent specification: **27.05.87**

(51) Int. Cl.⁴: **B 23 K 15/00**

(21) Application number: **83303165.1**

(22) Date of filing: **01.06.83**

(54) **Beamed energy radiation control method and apparatus, and processes and equipment comprising said method and apparatus respectively.**

(43) Date of publication of application:
**12.12.84 Bulletin 84/50**

(45) Publication of the grant of the patent:
**27.05.87 Bulletin 87/22**

(84) Designated Contracting States:
**DE FR GB IT**

(56) References cited:
**EP-A-0 008 773**
**EP-A-0 102 834**
**WO-A-81/01937**
**DE-A-2 153 695**
**DE-A-2 336 223**
**DE-A-2 541 943**
**US-A-4 219 720**

(73) Proprietor: **INOUE-JAPAX RESEARCH INCORPORATED**
**5289 Aza Michimasa Nagatsudamachi Midoriku Yokohamashi Kanagawaken (JP)**

(72) Inventor: **Inoue, Kiyoshi**
**3-16-8 Kamiyoga**
**Setagayaku Tokyo (JP)**

(74) Representative: **Saunders, Harry et al**
**SAUNDERS & DOLLEYMORE European Patent Attorneys 2 Norfolk Road**
**Rickmansworth Hertfordshire WD3 1JH (GB)**

## Description

The present invention relates to energy beam control and, more particularly, to a new and improved method of and apparatus for the control of beamed energy radiation for use in welding, cutting, drilling, heat-treatment or other machining or material processing operations as well as in measurements.

In recent times there have been increasingly wide-spreaded uses of energy beams, e.g. electron beams, ion beams, plasma beams or laser beams in the fields of machining, processing and measurement arts.

In these applications it has become apparent that is is desirable to pulse beamed energy radiation and also to control the energy flow being radiated onto a workpiece, precisely depending upon the particular operation to be performed thereon. While various control devices have hitherto been proposed and put into practical use for a beam gun and a power supply therefor, these devices have been found to be either highly sophisticated in structure or unsatisfactory in precisely controlling the energy flow onto the workpiece in a particular desired mode.

European Patent Specification No. 008773 discloses a laser cutting head for a turret punch machine tool. A beam generator coupled to the laser cutting head is capable of producing both laser pulses of varying duration and spacing or a continuous beam. The cutting head is provided with two gas inputs one for use with the continuous beam and the other for use with the pulse beam.

The present invention seeks to provide a novel and improved method which is capable of precisely controlling beamed energy onto a workpiece in a particular mode in a beam radiation system and also to provide a novel and improved beam radiation control apparatus which is relatively simple in construction and capable of the precision-control of the beamed energy flow in any particular desired mode.

In accordance with the present invention, in one aspect thereof, there is provided a method of controlling beamed energy radiation onto a workpiece, the method comprising: producing a beamed energy flow in the form of a series of successive, time-spaced pulsed energy beams for irradiation of the workpiece; and controlling said beamed energy flow being radiated onto the workpiece by controlling at least one parameter of the pulsed energy beams including the time duration $\tau$ on of said pulsed energy beams, the time interval $\tau$ off between the successive pulsed energy beams, characterised in that the pulsed energy beam is applied in the form of a series of time spaced groups and in that the parameters from which at least one is selected to control the energy flow further includes the time duration $\tau$ on of said groups, the time interval $\tau$ off between the successive groups and the number $n$ of the pulsed energy beams in each of said groups.

The present invention also provides, in another aspect thereof, an apparatus for controlling beamed energy radiation onto a workpiece, the apparatus comprising: a beam gun for producing a beamed energy flow; a power supply operatively connected to said beam gun for producing said beamed energy flow in the form of energy beams for irradiation of the workpiece; and setting means associated with said power supply for selecting respective preset values of parameters including the time duration $\tau$ on of said pulsed energy beams, the time interval $\tau$ off between the successive pulsed energy beams, characterised by control means for controlling the beamed energy flow from the beam gun to be in the form of a series of time spaced groups of pulsed energy beams and in that the parameters selected by the setting means further include the time duration $\tau$ on of said groups, the time interval $\tau$ off between the successive groups and the number $n$ of the pulsed energy beams in each of said groups.

These and other features of the present invention as well as advantages will become more readily apparent from a reading of the following description of certain exemplary embodiments thereof when taken with reference to the accompanying drawings in which:

Fig. 1 is a waveform diagram illustrating a basic form of a series of successive, time-spaced groups of pulsed energy beams for use in the present invention;

Fig. 2 is a schematic representation diagrammatically illustrating one form of the apparatus according to the present invention;

Figs. 3—5 are circuit diagrams illustrating different embodiments of the signal pulse generator for use in a power supply for a beam gun of the apparatus in accordance with the present invention;

Fig. 6 is a schematic representation diagrammatically illustrating another embodiment of the apparatus according to the present invention; and

Fig. 7 is another form of the power supply for the beam gun of the apparatus according to the present invention.

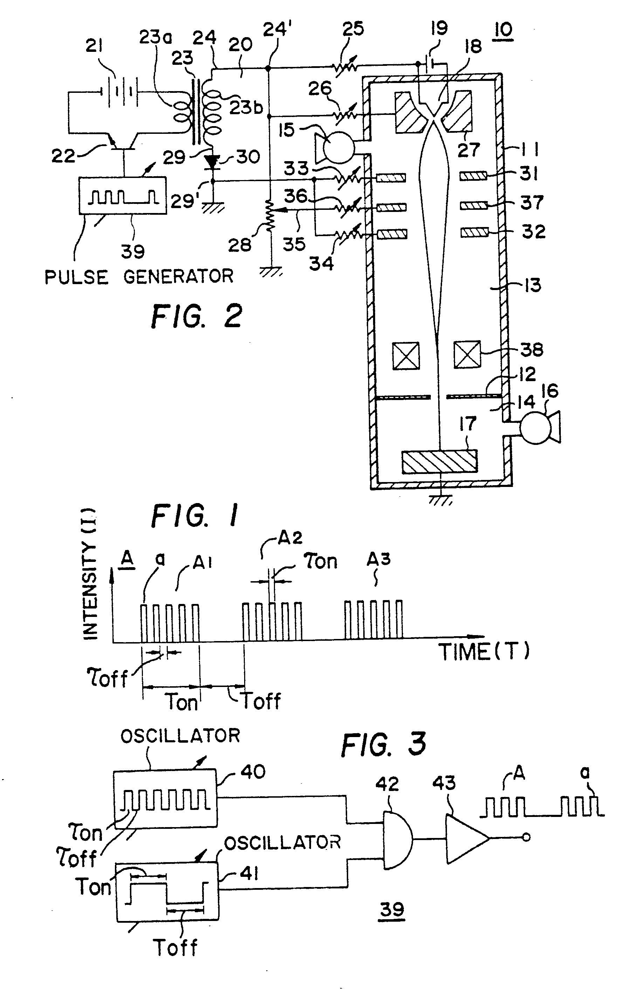

Referring now to Fig. 1, there is shown a series of sucessive time-spaced groups of pulsed, time-spaced energy beams $A$ according to the present invention. Three groups or trains in the series $A$ are shown and designated by A1, A2 and A3. The groups, A1, A2, A3, ... are shown as having a duration T on and a time interval T off between successive groups. Each group A1, A2, A3, ... consists of $n$ time-spaced pulsed beams $a$ which are shown as having a duration $\tau$ on and a time interval $\tau$ off. The pulsed energy beams $a$ may be beams of electrons, ions, molecules, or plasma or other composite particles, or a laser. It is seen that all beams $a$ in each group have an equal or uniform intensity and it should be noted that at least a majority of pulsed beams $a$ in each group A1, A2, A3, ... should advantageously have an equal intensity $I$. In some energy beam operations, it is desirable that the first one or more pulsed beams *a* in each group A1, A2, A3, ... have an intensity either greater or smaller than the remainder therein.

In Fig. 2, there is a shown an electron beam system 10 which embodies the present invention. The system 10 comprises an evacuated housing 11 which is divided by an apertured partition 12 into two chambers 13 and 14. These chambers are evacuated by vacuum pumps 15 and 16, respectively. In the lower chamber 14 there is disposed a workpiece 17 for irradiation by a series of a series (*A*) of time-spaced groups (A1, A2, A3, ...) of time-spaced, pulsed energetic electron beams *a* as shown in Fig. 1. The workpiece 17 is shown as grounded. The workpiece 17 may here be drilled, for instance.

Within the upper chamber 13 at a top end thereof there is provided a source of electrons constituted by a filament electrode 18 and a DC supply 19. The filament electrode 18 is heated by the DC supply 19 to emit electrons. The emitted electrons are controlledly extracted and accelerated by a novel power supply 20 to produce a series *A* of groups of time-spaced, pulsed energetic electron beams *a* according to the present invention. The power supply 20 comprises a DC source 21 connected in series with a switch 22 to the primary winding 23*a* of a step-up transformer 23. The secondary winding 23*b* of the transformer 23 has one terminal 24 connected via a resistor 25 to the filament electrode 18 and also via a resistor 26 to a Wehnelt electrode 27. The junction 24' of the resistors 25 and 26 is connected via a resistor 28 to ground. The other terminal 29 of the secondary winding 23*b* of the transformer 23 is also grounded via a diode 30 orientated as shown. The junction 29' of the negative pole of the diode 30 and ground is connected to acceleration electrodes 31 and 32 via resistors 33 and 34 respectively. The resistor 28 is tapped by an adjustable arm 35 which is connected via a resistor 36 to an electrostatic lens electrode 37 disposed between the acceleration electrode 31 and 32 within the upper chamber 13. In the region of the lower end of the upper chamber 13 there is disposed a beam-focusing coil 38 energized by a power supply (not shown). The switch 22 in the primary side of the transformer 23 is alternately turned on and off by a pulse generator 39 to pulse the output of the DC source 31.

The pulse generator 39 is designed to provide a series of successive, time-spaced groups or trains of discrete, time-spaced signal pulses of a waveform as shown in Fig. 1 to develop such a series of groups or trains of pulses at the primary winding 23*a* of the transformer 23. This will cause a series of successive, time-spaced groups or trains of discrete, time-spaced output pulses of a voltage stepped up to a predetermined value to develop across the junctions 29' and 24'. By adjusting the signal pulses at the pulse generator 39, these output voltage pulses *a* are controlled to have a predetermined duration τ on and a predetermined time interval τ off. The successive groups or trains A1, A2, A3, ... are controlled to have a predetermined duration T on and a predetermined time interval or cut-off time T off. The number *n* of pulses *a* in each group A1, A2, A3, ... is also controlled. The controlled output voltage pulses are applied between the Wehnelt electrode 27 and the filament electrode 18 and also between the acceleration electrodes 32 and 31, and the Wehnelt electrode 27 so that there are produced in the chamber 13 pulsed energetic electron beams in the form of a series *A* of successive, time-spaced groups or trains A1, A2, A3, ... of pulsed beams *a* as shown in Fig. 1. The pulsed beams *a* in each group or train A1, A2, A3, ... have a controlled duration τ on and a controlled time interval τ off. The groups or trains A1, A2, A3, ... in the series *A* have a controlled duration T on and a controlled time-interval or cut-off time T off. Each group or train A1, A2, A3, ... has a controlled number *n* of pulsed beams *a*. The individual pulsed beam produced is focused through the coil 38 to result in a narrow beam of a controlled diameter which impinges on the workpiece 17 in the chamber 14. The intensity of each pulsed beam is preset through the adjustment of the resistor 25, 26, 28, 33, 34, 36.

The pulse generator 39 may be constructed in the form shown in Fig. 3. The pulse generator there shown includes two oscillators 40 and 41. The oscillator 40 produces a series of discrete, time-spaced narrow pulses *a* of an adjustable frequency *f* as well as a duration τ on and an interval τ off which are adjustable independently of each other. The oscillator 41 produces a series of time-spaced wider pulses *A* of an adjustable frequency *F* as well as an on-time T on and an off-time T off which are adjustable independently of each other. The outputs of the oscillators 40 and 41 are combined by an AND gate 42 which thus issues through an amplifier 43 a series of successive, time-spaced group or trains A of discrete, time-spaced pulses *a* having controlled parameters τ on, τ off, T on, T off, *n*. The oscillators 40 and 41 may each be constituted by an astable multivibrator of conventional design.

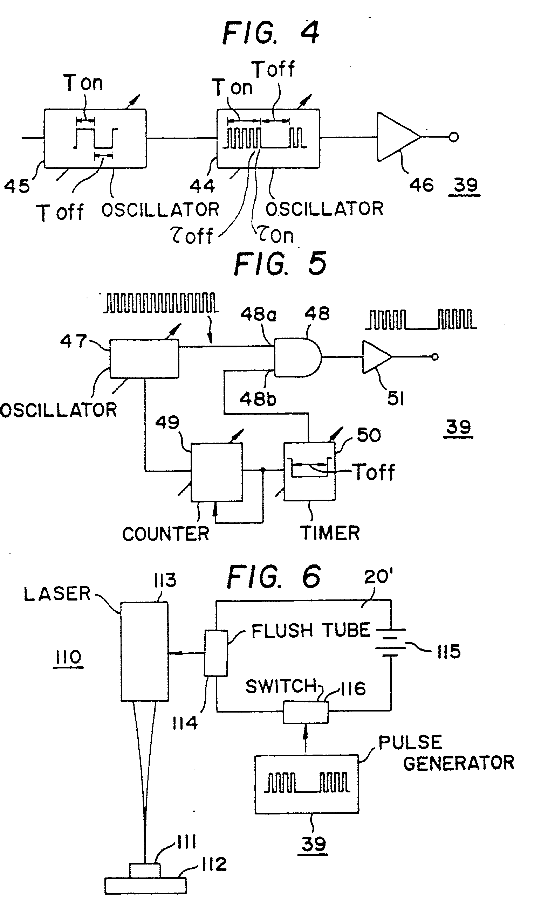

An alternative form of the construction of the pusle generator 39 shown in Fig. 4 makes use of the series connection of two oscillators 44 and 45. The oscillator 44 operates at adjustable frequency *f* to provide switching pulses of adjustable duration τ on and interval τ off which are applied via an amplifier 46 to the switch 22 (Fig. 2). The oscillator 45 operates at an adjustable frequency *F* which is lower than the frequency *f* of the oscillator 44 to provide control pulses of adjustable on-time T on and off-time T off which are applied to the oscillator 44. Accordingly, the switch 22 is operated to turn on and off the DC source 21 (Fig. 2) and provides across the primary winding 23*a* and hence across the junctions 29' and 24' the series *A* of successive groups or trains of voltage pulses *a* having controlled parameters τ on, τ off, T on, T off and *n*. As in Fig. 3, the oscillators 44 may each be constituted by an astable multivibrator of conventional design.

Fig. 5 shows another form of the pulse generator 39 which may be employed. In this embodiment, an oscillator 47, e.g. an astable multivibrator, furnishes a uniform, series of signal pulses $a$ to an AND gate 48 through the latter's first input terminal 48$a$. The oscillator 47 has an additional output fed to a counter 49 which is adapted to count an adjustable preset number $n$ of output pulses from the oscillator 47, which number determines the time duration T on. The counter 49 upon the counting is reset while issuing a trigger signal which is applied to activate a timer 50, e.g. a monostable multivibrator, which determines an adjustable time T off for groups or trains A1, A2, A3, ... when actuated, the timer 50 provides an "inhibit" signal to disable the AND gate 48 to pass, and to interrupt, the pulses $a$ to an amplifier 51. The timer 50, upon termination of the time T off, provides an "enable" signal to permit the AND gate 48 to pass to pulses $a$ to the amplifier 51. Thus, in this embodiment as well, it will be seen a series $A$ of successive, time-spaced groups A1, A2, A3, ... of discrete, time-spaced signal pulses $a$ of adjustable parameters $\tau$ on, $\tau$ off, T on, T off, $n$ is applied to the switch 22.

Fig. 6 shows another embodiment of the present invention, viz. as applied to a laser system 110, e.g. for machining a workpiece 111 mounted on a worktable 112. A laser gun 113 is pumped or actuated by a flush tube 114 to produce a laser beam which is trained towards the workpiece 111. The flush tube 114 is energized by a DC supply 115 which is connected thereto in series with a power switch 116. The latter is turned on and off in response to signal pulses furnished by a pulse generator 39, which may be of any one of the constructions shown in Figs. 3—5, to flush the tube 114 pulsively and in turn to cause the gun 113 to generate pulsed laser beams in the form of a series $A$ of successive, time-spaced groups or trains A1, A2, A3, ... of discrete, time-spaced laser beams $a$ (Fig. 1) which are directed to impinge a given narrow spot on the workpiece 111 supported by the worktable 112.

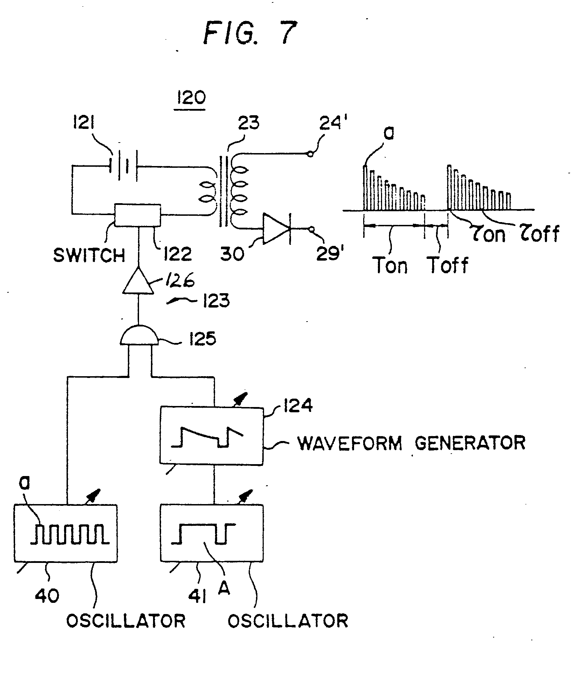

Fig. 7 shows another embodiment of the power supply 20 for energizing a beam-gun system as previously described. The power supply 20 in this embodiment includes, as in the arrangement of Fig. 2, a step-up transformer 23 having output terminals 24' and 29' at its secondary side with a diode 30 being connected as shown. The primary winding of the transformer 23 is connected in series with a DC source 121 and a switch 122 which is designed to form a variable resistor which provides at the transformer 23 a voltage output whose magnitude is proportional to a control input signal applied thereto from a pulse generator 123. The pulse generator 123 here again includes two oscillators 40 and 41 as previously described, which provide a uniform series of narrow adjustable pulses $a$ and a uniform succession of adjustable wider pulses $A$. In this embodiment, however, a waveform generating circuit 124 adapted to provide a variable lump voltage waveform in response to the leading edge of each of the pulses produced in the oscillator 41, and also to respond to the trailing edge thereof to terminate the produced lump voltage. The outputs of the oscillator 40 and the waveform-generating circuit 124 are tied at a gate 125 whose output is fed via an amplifier 126 to the switch 122. As a result, there develops a series of composite pulses across the output terminals 24' and 29' of the power supply 120, each of the composite pulses having an envelop waveform determined by the circuit 124 and being composed of discrete, short-duration pulses $a$. The beam gun system can be energized by the developed series of these composite pulses to produce a corresponding series of pulsed energy beams for irradiation of a workpiece.

**Claims**

1. A method of controlling beamed energy radiation onto a workpiece, the method comprising:

producing a beamed energy flow in the form of a series of successive, time-spaced pulsed energy beams for irradiation of the workpiece; and

controlling said beamed energy flow being radiated onto the workpiece by controlling at least one parameter of the pulsed energy beams including the time duration $\tau$ on of said pulsed energy beams, the time interval $\tau$ off between the successive pulsed energy beams, characterised in that the pulsed energy beam is applied in the form of a series of time spaced groups and in that the parameters from which at least one is selected to control the energy flow further includes the time duration $\tau$ on of said groups, the time interval $\tau$ off between the successive groups and the number $n$ of the pulsed energy beams in each of said groups.

2. The method defined in Claim 1 wherein at least a majority of the pulsed energy beams in each of said groups has a uniform intensity.

3. An apparatus for controlling beamed energy radiation onto a workpiece, the apparatus comprising:

a beam gun for producing a beamed energy flow;

a power supply operatively connected to said beam gun for producing said beamed energy flow in the form of energy beams for irradiation of the workpiece; and

setting means associated with said power supply for selecting respective preset values of parameters including the time duration $\tau$ on of said pulsed energy beams, the time interval $\tau$ off between the successive pulsed energy beams, characterised by

control means for controlling the beamed energy flow from the beam gun to be in the form of a series of time spaced groups of pulsed energy beams and in that

the parameters selected by the setting means further include the time duration $\tau$ on of said groups, the time interval $\tau$ off between the successive groups and the number $n$ of the pulsed energy beams in each of said groups.

4. The apparatus defined in Claim 3, further comprising an additional setting means for preset-

ting the intensity of each of said pulsed energy beams in each of said groups at a predetermined value.

5. A method according to Claim 1 characterised in that the beamed energy radiation is produced from a beam gun, in that the beam gun is energised by a power supply to produce a series of pulsed energy beams; in that the energisation of the power supply is controlled to provide a series of successive, time-spaced groups of discrete, time-spaced electrical pulses to produce said series of pulsed energy beams from said beam gun; and in that at least one of the time duration τ on of said electrical pulses, the time interval τ off between successive electrical pulses, the time duration τ on of said groups, the time interval τ off between the successive groups and the number $n$ of said electrical pulses in each of said groups is controlled.

6. The method defined in Claim 5 wherein at least a majority of said electrical pulses in each of said groups have a predetermined uniform magnitude.

7. The method defined in Claim 5, further comprising: changing the magnitudes of said electrical pulses in each of said groups in a predetermined format to give each of said pulsed beams a corresponding format of time-intensity characteristic.

8. An apparatus according to Claim 3 characterised in that control means controls

the power supply to produce therein a series of successive, time-spaced groups of discrete, time-spaced electrical pulses and in that the setting means controls at least one of the time duration τ on of said electrical pulses, the time interval τ off between the successive electrical pulses, the time duration τ on of said groups and the time interval τ off between the successive groups and the number $n$ of said electrical pulses in each of said groups, thereby controlling the energy flow by said pulsed energy beams onto the workpiece.

9. The apparatus defined in Claim 8, further comprising means for controlling the magnitudes of said electrical pulses.

10. The apparatus defined in Claim 9 wherein said magnitude-control means is adapted to change the magnitudes of the electrical pulses in each of said groups in a predetermined format of time-magnitude characteristic to give each of said pulsed energy beams a corresponding format of time-intensity characteristic.

11. A welding, cutting, drilling, heat-treatment or other machining, material treating or measuring process applied to a workpiece, wherein energy radiation is beamed onto said workpiece and said radiation is controlled by the method defined in any one of Claims 1, 2, 5, 6 and 7, or by means of the apparatus defined in any one of Claims 3, 4, 8, 9 and 10.

12. Equipment for welding, cutting, drilling heat-treating or other machining or material treating or measuring a workpiece, wherein energy radiation is beamed onto said workpiece, said equipment including means for controlling said energy radiation by the method defined in any one of Claims 1, 2, 5, 6 and 7, or including for this purpose the apparatus defined in any one of Claims 3, 4, 8, 9 and 10.

**Patentansprüche**

1. Verfahren zum Steuern eines auf ein Werkstück gerichteten Energiestrahlungsbündels, das die folgenden Schritte umfaßt:

Erzeugen eines gebündelten Energieflusses in Gestalt einer Reihe von aufeinanderfolgenden, zeitlich getrennten, gepulsten Energiestrahlen zum Bestrahlen des Werkstückes und

Steuern des auf das Werkstück gestrahlten Energieflusses durch Steuern wenigstens einer der Parameter des gepulsten Energiestrahles, wie die Zeitdauer τ on der gepulsten Energistrahlen und das Zeitintervall τ off zwischen den aufeinanderfolgenden gepulsten Energiestrahlen, dadurch gekennzeichnet, daß der gepulste Energiestrahl in Gestalt einer Folge von zeitlich getrennten Gruppen angewendet wird und daß die Parameter, unter denen wenigstens einer ausgewählt wird, um den Energiefluß zu steuern, zusätzlich die Zeitdauer τ on der Gruppen, das Zeitintervall τ off zwischen aufeinanderfolgenden Gruppen und die Zahl $n$ der gepulsten Energiestrahlen in jeder der Gruppen umfaßt.

2. Verfahren nach Anspruch 1, bei dem wenigstens eine Mehreheit der gepulsten Energiestrahlen in jeder der Gruppen eine übereinstimmende Intensität hat.

3. Vorrichtung zum Steuern gebündelter Energiestrahlung auf ein Werkstück mit:

einer Strahlenkanone zum Erzeugen eines gebündelten Energieflusses,

einem wirkungsmäßig an die Strahlenkanone angeschlossenen Stromversorgungsgerät zum Erzeugen des gebündelten Energieflusses in Gestalt von Energiestrahlen zum Bestrahlen des Werkstückes und mit

dem Stromversorgunsgerät zugeordneten Einstelleinrichtungen zum Auswählen jeweiliger voreingestellter Werte von Parametern, wie die Zeitdauer τ on der gepulsten Energiestrahlen, und die Zeitintervalle τ off zwischen aufeinanderfolgenden gepulsten Energiestrahlen, gekennzeichnet durch

Steuereinrichtungen zum Steuern des gebündelten Energieflusses von der Strahlenkanone, um die Gestalt einer Folge von zeitlich getrennten Gruppen von gepulsten Energiestrahlen zu haben und dadurch, daß

die Parameter, die durch die Einstelleinrichtungen ausgewählt sind, zusätzlich die Zeitdauer τ on der Gruppen, das Zeitintervall τ off zwischen den aufeinanderfolgenden Gruppen und die Zahl $n$ der gepulsten Energiebündel in jeder Gruppe umfassen.

4. Vorrichtung nach Anspruch 3, die weiterhin eine zusätzliche Einstelleinrichtung zum Voreinstellen der Intensität jeden gepulsten Energiestrahles in jeder der Gruppen auf einen vorherbestimmten Wert aufweist.

5. Verfahren nach Ansrpuch 1, dadurch gekennzeichnet, daß die gebündelte Energiestrahlung von einer Strahlenkanone erzeugt wird, daß die Strahlenkanone durch ein Stromversorgungsgerät mit Energie versorgt word, um eine Folge von gepulsten Energiestrahlen zu erzeugen, daß die Energieversorgung des Stromversorgungsgerätes gesteuert ist, um eine Folge von aufeinanderfolgenden, zeitlich getrennten Gruppen von diskreten zeitlich getrennten elektrischen Impulsen zu liefern, um die Folge der gepulsten Energiebündel durch die Strahlenkanone zu erzeugen, und daß wenigstens die Zeitdauer $\tau$ on der elektrischen Impulse, das Zeitintervall $\tau$ off zwischen aufeinanderfolgenden elektrischen Impulsen, die Zeitdauer $\tau$ on Gruppen, das Zeitintervall $\tau$ off zwischen den aufeinanderfolgenden Gruppen oder die Zahl $n$ der elektrischen Impulse in jeder der Gruppen gesteuert wird.

6. Verfahren nach Anspruch 5, bei dem wenigstens die Mehrzahl der elektrischen Impulse in jeder der Gruppen eine übereinstimmende Größe hat.

7. Verfahren nach Anspruch 5, bei dem weiter vorgesehen ist: Verändern der Größen der elektrischen Impulse in jeder der Gruppen in einem vorherbestimmten Format, um jedem der gepulsten Strahlen ein entsprechendes Format einer Zeit-Intensität-Charakteristik zu verleihen.

8. Vorrichtung nach Anspruch 3, dadurch gekennzeichnet, daß Steuereinrichtungen vorgesehen sind zum Steuern

des Stromversorgungsgerätes, um darin eine Folge von aufeinanderfolgenden, zeitlich getrennten Gruppen von diskreten zeitlich getrennten elektrischen Impulsen zu erzeugen, und daß die Einstelleinrichtung wenigstens die Zeitdauer $\tau$ on der elektrischen Impulse, das Zeitintervall $\tau$ off zwischen aufeinanderfolgenden elektrischen Impulsen, die Zeitdauer $\tau$ on der Gruppen, das Zeitintervall $\tau$ off zwischen aufeinanderfolgenden Gruppen oder die Zahl $n$ der elektrischen Impulse in jeder der Gruppen steuert, wodurch der Energiefluß der gepulsten Energiestrahlen auf das Werkstück gesteuert wird.

9. Vorrichtung nach Anspruch 8, die zusätzlich eine Einrichtung zum Steuern der Größen der elektrischen Impulse umfaßt.

10. Vorrichtung nach Anspruch 9, bei der die Größensteuereinrichtung ausgebildet ist, um die Größen der elektrischen Impulse in jeder der Gruppen gemäß einer vorherbestimmten Form einer Zeit-Größen-Kennlinie zu verändern, um jedem der gepulsten Energisetrahlen eine entsprechende Form einer Zeit-Intensitäts-Kennlinie zu verleihen.

11. Schweißbearbeitung, Schneidbearbeitung, Bohrbearbeitung, Hitzehehandlung oder sonstige Formegebung, Materialbehandlung oder Meßverfahren in Anwendung auf ein Werkstück, wobei Energiestrahlung auf das Werkstück ausgerichtet wird und die Strahlung durch das Verfahren gemäß einem der Ansprüche 1, 2, 5, 6 oder 7 oder durch die Vorrichtung gemäß einem der Ansprüche 3, 4, 8, 9 oder 10 gesteuert wird.

12. Ausrüstung zum Schweißen, Schneiden, Bohren, Wärmebehandeln oder sonstigen Bearbeiten oder Materialbehandeln oder Vermessen eines Werkstückes, bei der die Energiestrahlung auf ein Werkstück ausgerichtet ist, wobei die Ausrüstung Einrichtungen zum Steuern der Energiestrahlung gemäß dem Verfahren nach einem der Ansprüche 1, 2, 5, 6 oder eine Vorrichtung umfaßt, wie sie in einem der Ansprüche 3, 4, 8, 9 oder 10 definiert ist.

**Revendications**

1. Procédé commande d'une radiation d'énergie en faisceau dirigée sur une pièce travaillée, ce procédé comprenant:
— la production d'un flux d'énergie en faisceau sous forme d'une série de faisceaux d'énergie pulsés successifs, espacés dans le temps pour l'irradiation de la pièce travaillée, et
— la commande de ce flux d'énergie en faisceau en cours d'irradiation sur la pièce travaillée par le contrôle d'au moins un paramètre des faisceaux d'énergie pulsés comprenant la durée du temps $\tau$ d'émission de ces faisceaux d'énergie pulsés, l'intervalle de temps $\tau$ d'interruption entre les faisceaux d'énergie pulsés successifs, caractérisé en ce que le faisceau pulsé d'énergie est appliqué sous forme d'une série du groupes espacés dans le temps et en ce que les paramètres parmi lesquels l'un au moins est sélectionné pour commander le flux d'énergie incluent en plus la durée du temps $\tau$ d'émission de ces groupes, l'intervalle de temps $\tau$ d'interruption entre les groupes successifs et le nombre $n$ des faisceaux pulsés d'énergie dans chacun de ces groupes.

2. Procédé selon la revendication 1 dans lequel au moins une majorité des faisceaux pulsés d'énergie dans chacun des groupes a une intensité uniforme.

3. Appareil pour la commande d'une readiation d'énergie en faisceau dirigé sur une pièce travaillée, cet appareil comprenant:
— un canon apte à fournir un faisceau pour la production d'un flux d'énergie en faisceau,
— une source d'énergie reliée fonctionnellement à ce canon pour produire ledit flux d'énergie en faisceau sous forme de faisceaux d'énergie pour l'irradiation de la pièce travaillée, et
— des moyens de réglage associés à ladite source d'énergie pour la sélection de valeurs respectives préréglées de paramètres incluant la durée du temps $\tau$ d'émission des faisceaux pulsés d'énergie, l'intervalle de temps $\tau$ d'interruption entre les faisceaux successifs pulsés d'énergie, caractérisé par des moyens de commande pour le contrôle du flux d'énergie en faisceau provenant du canon sous forme d'une série de groupes espacés dans le temps de faisceaux pulsés d'énergie et en ce que les paramètres choisis par les moyens de réglage comprennent en plus la durée du temps $\tau$ d'émission desdits groupes, l'intervalle de temps $\tau$ d'interruption entre les groupes successifs et le nombre $n$ de faisceaux pulsés d'énergie dans chacun desdits groupes.

4. Appareil selon la revendication 3 comprenant en outre des moyens de réglage additionnels pour le préréglage à une valeur prédéterminée de l'intensité de chacun des faisceaux pulsés d'énergie dans chacun desdits groupes.

5. Procédé selon la revendication 1 caractérisé en ce que la radiation d'énergie en faisceau est produite à partir d'un canon apte à produire un faisceau, en ce que le canon est excité par une source d'énergie pour produire une série de faisceaux pulsés d'énergie, en ce que l'excitation de la source d'énergie est contrôlé pour l'obtention d'une série de groupes successifs espacés dans le temps d'impulsions électriques discrètes, espacées dans le temps pour produire ladite série de faisceaux pulsés d'énergie provenant du canon, et en ce que l'un au moins de la durée du temps $\tau$ d'émission des impulsions électrique, l'intervalle de temps $\tau$ d'interruption entre les impulsions électriques successives, la durée du temps $\tau$ d'émission desdits groupes, l'intervalle de temps $\tau$ d'interruption entre les groupes successifs et le nombre $n$ des impulsions électriques dans chacun desdits groupes, est contrôlé.

6. Procédé selon la revendication 5 dans lequel au moins une majorité desdites impulsions électriques dans chacun desdits groupes a une grandeur uniforme prédéterminée.

7. Procédé selon la revendication 5 caractérisé en ce qu'il comprend en outre le changement d'un format prédéterminé des grandeurs desdites impulsions électriques dans chacun desdits groupes pour donner à chacun des faisceaux pulsés un format correspondant de la caractéristique intensité-temps.

8. Appareil selon la revendication 3 caractérisé en ce que les moyens de commande contrôlent la source d'énergie pour y produire une série de groupes successifs espacés dans le temps d'impulsions électriques discrètes espacées dans le temps et en ce que les moyens de réglage contrôlent au moins l'un de la durée du temps $\tau$ d'émission desdites impulsions électriques, l'intervalle de temps $\tau$ d'interruption entre les impulsions électriques successives, la durée du temps $\tau$ d'émission desdits groupes et l'intervalle de temps $\tau$ d'interruption entre les groupes successifs et le nombre $n$ desdites impulsions électriques dans chacun desdits groupes, contrôlant ainsi le flux d'énergie dirigé sur la pièce travaillée par lesdits faisceaux pulsés d'énergie.

9. Appareil selon la revendication 8 comprenant en plus des moyens pour le contrôle de la grandeur desdites impulsions électriques.

10. Appareil selon la revendication 9 dans lequel les moyens de contrôle de la grandeur sont aptes à changer les grandeurs des impulsions électriques dans chacun desdits groupes d'un format prédéterminé de la caractéristique grandeur-temps afin de donner à chacun des faisceaux pulsés d'énergie un format correspondant de la caractéristique intensité-temps.

11. Procédé de soudure, de coupe, de perçage, de traitement à la chaleur, ou d'autre opération d'usinage, de traitement de matière ou de mesure, appliqué à une pièce travaillée, selon lequel une énergie de radiation est dirigée en faisceau sur la pièce travaillée et cette radiation est contrôlé par le procédé de l'une quelconque des revendications 1, 2, 5, 6 et 7 ou à l'aide de l'appareil de l'une quelconque des revendications 3, 4, 8, 9 et 10.

12. Equipement pour souder, couper, percer, traiter à la chaleur, ou pour une autre opération d'usinage ou pour traiter une matière, ou pour mesurer une pièce, avec lequel de l'énergie de radiation est dirigée en faisceau sur la pièce travaillée, cet équipement comprenant des moyens pour contrôler l'énergie de radiation par le procédé de l'une quelconque des revendications 1, 2, 5, 6 et 7, ou comprenant à cette fin l'appareil de l'une quelconque des revendications 3, 4, 8, 9 et 10.

0 127 706

FIG. 2

PULSE GENERATOR

FIG. 1

INTENSITY (I)

TIME(T)

FIG. 3

OSCILLATOR

OSCILLATOR

## FIG. 4

Ton

Toff
Ton

45  44  46  39

Toff  OSCILLATOR  OSCILLATOR

Toff  Ton

## FIG. 5

48a  48

47

51

OSCILLATOR  48b

49  50  39

Toff

COUNTER  TIMER

## FIG. 6  20'

LASER  113

FLUSH TUBE

110  115

114  SWITCH  116

111  PULSE
GENERATOR

112  39

# FIG. 7

SWITCH

WAVEFORM GENERATOR

OSCILLATOR    OSCILLATOR